Europäisches Patentamt

European Patent Office

Office européen des brevets

(11) Veröffentlichungsnummer: **0 229 220 B1**

## (12) EUROPÄISCHE PATENTSCHRIFT

(45) Veröffentlichungstag der Patentschrift:
27.09.89

(21) Anmeldenummer: **86111351.2**

(22) Anmeldetag: **16.08.86**

(51) Int. Cl.⁴: **H01F 40/06**

(54) Stromwandleranordnung.

(30) Priorität: **09.10.85 CH 4345/85**

(43) Veröffentlichungstag der Anmeldung:
**22.07.87 Patentblatt 87/30**

(45) Bekanntmachung des Hinweises auf die Patenterteilung:
**27.09.89 Patentblatt 89/39**

(84) Benannte Vertragsstaaten:
**AT DE FR GB**

(56) Entgegenhaltungen:
**DE-A- 2 728 191**
**DE-C- 2 325 451**

(73) Patentinhaber: **Sprecher Energie AG, Kirchweg 5,
CH-5036 Oberentfelden(CH)**

(72) Erfinder: **Schütz, Willy, Belchenweg 28,
CH-5033 Buchs(CH)**
Erfinder: **Hadorn, Peter, Hubel 8, CH-5034 Suhr(CH)**
Erfinder: **Tschannen, Christian, Feldstrasse 167,
CH-5035 Unterentfelden(CH)**
Erfinder: **Colin, Jean-Morel, Delfterstrasse 24,
CH-5000 Aarau(CH)**
Erfinder: **Gutalj, Vladimir, Nordstrasse 15,
CH-5035 Oberentfelden(CH)**

(74) Vertreter: **Patentanwälte Schaad, Balass & Partner,
Dufourstrasse 101 Postfach, CH-8034 Zürich(CH)**

## Beschreibung

Die vorliegende Erfindung betrifft eine Stromwandleranordnung für eine einen oder mehrere Stromleiter aufweisende gekapselte Schaltanlage gemäss Oberbegriff des Anspruches I und geht aus von der DE-C 2 325 451.

Bei bekannten Stromwandleranordnungen dieser Art sind die beiden Halteelemente mit dem Tragrohr verschweisst (DE-C 23 25 45I und DE-U 73 I8 880). Mittels des einen Halteelementes ist das Tragrohr an der Kapselung lösbar befestigt, während am andern Halteelement ein an der Innenwand der Kapselung zur Anlage kommendes Abstützelement aus elektrisch isolierendem Material befestigt ist. Die die Sekundärwicklungen tragenden Stromwandlerkerne sind zwischen den beiden Halteelementen eingespannt. Hiezu dienen Druckschrauben, die sich am einen Halteelement abstützen und über Druckstücke die Stromwandlerkerne gegen das andere Halteelement drücken.

Das Zusammenbauen dieser bekannten Stromwandleranordnungen ist verhältnismässig aufwendig, müssen noch zuerst alle Stromwandlerkerne auf das Tragrohr aufgeschoben werden, bevor das zweite Halteelement am Tragrohr angeschweisst werden kann. Erst dann können die Druckschrauben eingesetzt werden. Im weitern ist nach erfolgtem Einbau ein Austausch oder Hinzufügen von Stromwandlerkernen nicht ohne weiteres möglich, da hiefür zuerst das eine Halteelement wieder vom Tragrohr weggetrennt werden muss.

Der vorliegenden Erfindung liegt nun die Aufgabe zugrunde, eine Stromwandleranordnung der eingangs genannten Art von einfacher Bauweise zu schaffen, die mit möglichst geringem Aufwand und unter Verwendung von Normteilen zusammengebaut werden kann und bei der sich auch nach erfolgtem Einbauen ohne Schwierigkeiten Stromwandlerkerne austauschen, entfernen oder hinzufügen lassen.

Diese Aufgabe wird erfindungsgemäss durch die Merkmale des kennzeichnenden Teils des Anspruches I gelöst.

Nach dem Aufschieben des wenigstens einen Stromwandlerkernes auf das Tragrohr wird dieser Wandlerkern mittels eines separaten, von den beiden Halteelementen getrennten Festhalteorganes gegen das erste Halteelement gepresst. Die hiezu erforderliche Spanneinrichtung, die vorzugsweise Zuganker aufweist, wird noch dazu verwendet, das mit dem Tragrohr nicht fest verbundene zweite Halteelement mit dem ersten Halteelement zu verspannen. Das Zusammenbauen kann somit mit einfachen Mitteln auf rationelle Weise erfolgen.

Da das zweite Halteelement nicht mehr direkt zur Abstützung der Stromwandlerkerne dient und hiezu ein unabhängiges, in seiner Lage der Gesamthöhe der aufgeschobenen Stromwandlerkerne entsprechend anpassbares Festhalteorgan verwendet wird, können für Stromwandleranordnungen mit unterschiedlicher Anzahl von Wandlerkernen im wesentlichen immer gleichartige Tragrohre, Halteelemente, bzw. Festhalteorgane verwendet werden, was eine Normierung dieser Bauteile ermöglicht und die Lagerhaltung erleichtert.

Durch Lösen der Verspannung zwischen den Halteelementen kann das zweite Halteelement ohne Schwierigkeit entfernt werden, was nach erfolgtem Abheben des Festhalteorganes ein müheloses Austauschen, Entfernen oder Anfügen von Stromwandlerkernen ermöglicht.

Bevorzugte Weiterausgestaltungen der erfindungsgemässen Stromwandleranordnung bilden Gegenstand der abhängigen Ansprüche.

Im folgenden wird anhand der Zeichnung ein Ausführungsbeispiel des Erfindungsgegenstandes näher erläutert. Es zeigt rein schematisch:

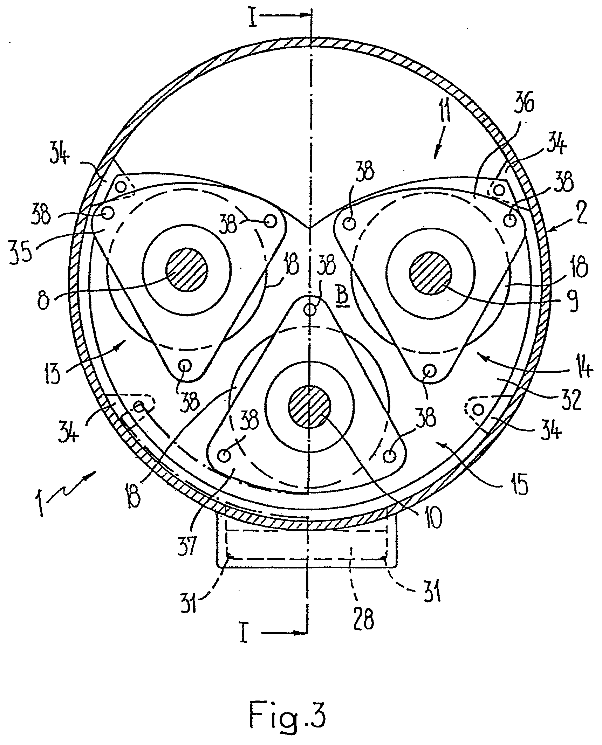

Figur I Einen Schnitt durch einen Teil einer dreiphasigen gekapselten Schaltanlage entlang der Linie I-I in Figur 3,

Figur 2 In gegenüber der Figur I vergrössertem Massstab den in Figur I mit A bezeichneten Ausschnitt,

Figur 3 Einen Schnitt entlang der Linie III-III in Figur I.

Die in den Figuren nur ausschnittweise dargestellte dreiphasige, gekapselte Schaltanlage I weist eine Kapselung 2 auf, die in an sich bekannter Weise mit einem Isoliergas gefüllt sein kann. Innerhalb dieser Kapselung ist ein nur schematisch angedeutetes Schaltgerät 7, z.B. ein Leistungsschalter, angeordnet. An dieses Schaltgerät 7 sind auf noch zu beschreibende Weise Stromleiter 8, 9, I0 angeschlossen, die die Primärleiter einer mit II bezeichneten Stromwandleranordnung bilden.

Die Stromwandleranordnung II weist drei Stromwandlerteile I3, I4, I5 auf, von denen jeder einer Phase zugeordnet ist. Jeder Stromwandlerteil I3, I4, I5 weist ein elektrisch leitendes Tragrohr I6 auf, das vorzugsweise aus Metall ist und welches den zugeordneten Stromleiter 8, 9 bzw. I0 umgibt. Auf ihrer Aussenseite tragen die Tragrohre I6 bewickelte Stromwandlerkerne I7, I8 und I9, die aus einem ringförmigen Eisenkern 20, 2I bzw. 22 und einer Sekundärwicklung 23, 24 bzw. 25 bestehen, wie das aus Figur I hervorgeht. Die Sekundärleiter 26 der Sekundärwicklungen 23, 24, 25 sind mit Durchführungen 27 verbunden, welche in einer Durchführungsplatte 28 eingegossen sind (Fig. I). Diese Durchführungsplatte 28 jedes Stromwandlerteils I3, I4, I5 ist in eine durch einen Abstützflansch 30 begrenzte Oeffnung 29 in der Kapselung 2 eingesetzt und mit der Kapselung 2 verschraubt. Zwischen der Durchführungsplatte 28 und der Kapselung 2 sind Dichtungen 3I eingelegt. Die über die Durchführungsplatte 28 vorstehenden Enden 27a der Durchführungen 27 bilden Stromwandleranschlüsse.

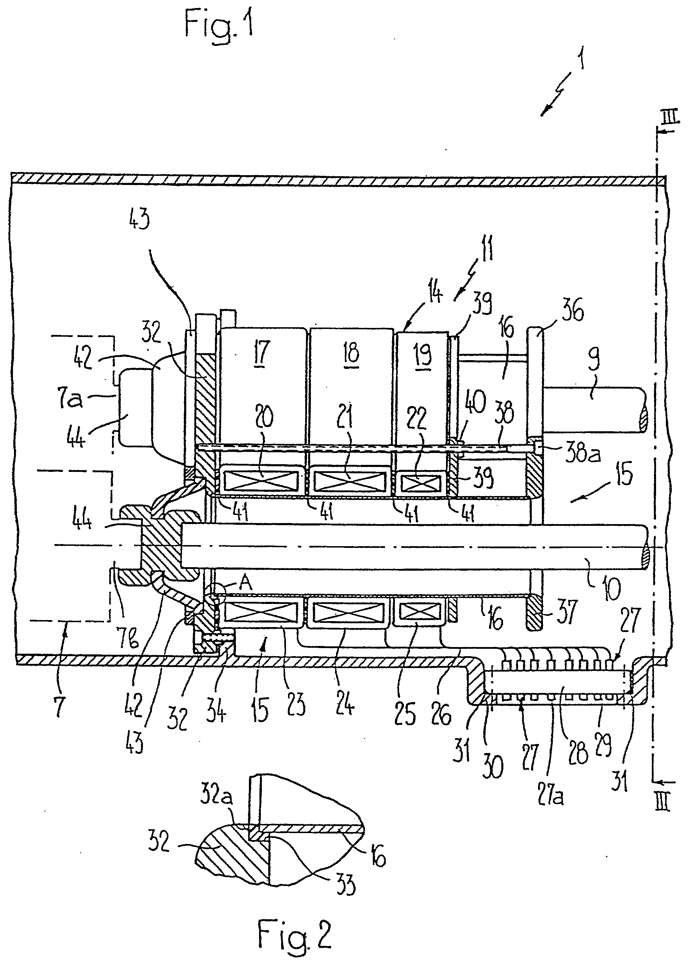

Die drei Tragrohre I6 jedes Stromwandlerteils I3, I4, I5 sind am einen Ende in einer allen Stromwandlerteilen I3, I4, I5 gemeinsamen metallischen Halteplatte 32 gehalten, die als Abschirmelektrode ausgebildet ist. Wie aus der Figur 2, welche in vergrössertem Massstab den Ausschnitt A der Figur I zeigt, hervorgeht, weist diese gemeinsame Halteplatte 32 ringförmige Ausnehmungen 32a auf, in denen je ein Zwischen- oder Zentrierring 33 aus einem elektrisch isolierenden Werkstoff eingesetzt ist. Die Tragrohre 16 stützen sich über diesen Zentrierring 33 an der Halteplatte 32 ab. Die Halteplatte 32 ist mittels Schrauben an Befestigungslaschen 34 befestigt, die an der Kapselung 2 angebracht sind und von deren Innenseite abstehen.

An der gemeinsamen Halteplatte 32 gegenüberliegenden Ende ist jedes Tragrohr 16 mit einer metallischen Endplatte 35, 36 bzw. 37 versehen, die ebenfalls als Abschirmelektrode ausgebildet ist. Wie aus Figur 3 hervorgeht, haben diese Endplatten 35, 36, 37, welche jeweils nur einem Tragrohr 16 zugeordnet sind, im wesentlichen die Form von gleichseitigen Dreiecken. Dabei sind diese sich auf dem zugeordneten Tragrohr 16 abstützenden Endplatten 35, 36, 37 derart angeordnet, dass die beiden Endplatten 35, 36 eine zueinander axialsymmetrische Lage einnehmen, während die dritte Endplatte 37 gegenüber den beiden Endplatten 35, 36 um 180 ° gedreht ist und in den Zwischenraum B zwischen den beiden andern Endplatten 35, 36 eingreift. Diese Ausbildung und Anordnung der Endplatten 35, 36, 37 ermöglicht eine platzsparende Bauweise.

Die Endplatten 35, 36, 37 sind mittels aus einem elektrisch leitenden Material bestehenden Zugankern 38 in der Form von Gewindestäben mit der gemeinsamen Halteplatte 32 verspannt. Diese Zuganker 38 sind in die Halteplatte 32 eingeschraubt und greifen mit ihren Köpfen 38a an den Endplatten 35, 36, 37 an, wie das insbesondere Figur 1 zeigt. Mittels dieser Zuganker 38 werden die Endplatten 35, 36, 37 gegen die Halteplatte 32 gezogen und sitzen so fest auf dem zugeordneten Tragrohr 16.

Die bewickelten Stromwandlerkerne 17, 18, 19 jedes Stromwandlerteiles 13, 14, 15 sind zwischen der gemeinsamen Halteplatte 32 und einer Festhalteplatte 39 festgeklemmt, die zwischen der Halteplatte 32 und der Endplatte 35, 36, 37 angeordnet ist. Diese Festhalteplatten 39 weisen vorzugsweise dieselbe Form auf wie die zugeordneten Endplatten 35, 36, 37 und sind auch gleich wie diese angeordnet. Die Festhalteplatten 39 werden mittels auf den Zugankern 38 sitzenden Muttern 40 (Fig. 1)in ihrer Lage festgehalten. Durch Anziehen dieser Muttern 40 werden die Stromwandlerkerne 17, 18, 19 mittels der Festhalteplatten 39 gegen die gemeinsame Halteplatte 32 gepresst. Zwischen den Stromwandlerkernen 17, 18, 19 und den Festhalteplatten 39 und der Halteplatte 32 sind Zwischenlagen 41 aus elektrisch isolierendem Material angeordnet.

Wie aus Figur 1 hervorgeht, sind auf der den Tragrohren 16 gegenüberliegenden Seite der gemeinsamen Halteplatte 32 konische Halteteile 42 aus einem elektrisch isolierenden Material angeordnet, welche mittels Halteringen 43 an der Halteplatte 32 festgehalten sind. In jedem Halteteil 42 ist ein Kupplungsstück 44 aus elektrisch leitendem Material gehalten, das einerseits mit dem zugeordneten Stromleiter 8, 9 bzw. 10 und andererseits mit einem Stromanschluss 7a, 7b des Schaltgerätes 7 in Verbindung steht. Ueber diese Kupplungsstücke 44 erfolgt somit die elektrische Verbindung zwischen den Stromleitern 8, 9, 10 und dem Schaltgerät 7.

Die Montage der Stromwandleranordnung 11 ist recht einfach. Die bewickelten Stromwandlerkerne 17, 18, 19 werden auf die mit der Halteplatte 32 verbundenen Tragrohre 16 aufgeschoben. Anschliessend werden die Festhalteplatten 39 und die Endplatten 35, 36, 37 aufgesetzt. Mittels der Zuganker 38 werden dann diese Endplatten 35, 36, 37 mit der Halteplatte 32 verspannt. Mittels der Muttern 40 werden dann die Stromwandlerkerne 17, 18, 19 zwischen der Halteplatte 32 und den Festhalteplatten 39 festgeklemmt.

Im weitern werden die die Kupplungsstücke 44 haltenden Halteteile 42 mittels der Halteringe 43 an der Halteplatte 32 befestigt. Es ist jedoch auch möglich, diese Halteteile 42 mit den Kupplungsstücken 44 erst nach dem Einbauen der Stromwandleranordnung 11 in die Schaltanlage 1 an der Halteplatte 32 anzubringen.

Das Einbauen der fertig montierten, geprüften und geeichten Stromwandleranordnung 11 erfolgt durch Einschieben derselben in die Kapselung 2 und Befestigen der Halteplatte 32 an den Befestigungslaschen 34. Die Stromleiter 8, 9, 10 können bereits vor dem Einbauen der Stromwandleranordnung 11 in der Kapselung 2 montiert sein oder erst nach erfolgtem Einbau der Stromwandleranordnung 11 in die Kapselung 2 eingeschoben werden.

Der Abstand zwischen der Halteplatte 32 und den Endplatten 35, 36, 37 wird durch die Länge der Tragrohre 16 festgelegt. Zwischen diesen Platten 32 und 35, 36, 37 können nun Stromwandlerkerne 17, 18, 19 der gewünschten Anzahl angeordnet werden, ohne dass dabei auf die Distanz zwischen den Platten 32 und 35, 36, 37 genau geachtet werden, da ja die Stromwandlerkerne 17, 18, 19 durch die Festhalteplatten 39 festgehalten werden und die Endplatten 35, 36, 37 keine diesbezügliche Halte- oder Abstützfunktion zu übernehmen haben. Das Austauschen, Entfernen oder Hinzufügen von Stromwandlerkernen ist auf einfache Weise ohne Schwierigkeiten dadurch möglich, dass die Zuganker 38 gelöst und die Endplatten 35, 36, 37 bzw. die Festhalteplatten 39 entfernt werden.

Mit wenigen genormten Bauteilen ist es nun möglich, Stromwandleranordnungen von unterschiedlichem Aufbau zu bilden. Hiezu können dieselben Endplatten 35, 36, 37 und dieselben Festhalteplatten 39 verwendet werden. Für Stromwandleranordnungen 11 mit verschiedener räumlicher Anordnung der Stromwandlerteile 13, 14, 15 ist es nur nötig, eine entsprechende Halteplatte 32 zu verwenden. Es sind somit nur wenige Bauteile an Lager zu halten.

Von möglichen Varianten wird im folgenden nur auf die wichtigsten hingewiesen.

Der zur Vermeidung eines Kurzschlussstromkreises dienende Zwischenring 33 kann auch zwischen den Tragrohren 16 und den Endplatten 35, 36, 37 angeordnet werden. Eine solche Lösung bringt jedoch gegenüber der gezeigten Ausführungsform einen zusätzlichen Aufwand, da auch zwischen den Tragrohren 16 und den Festhalteplatten 39 ein entsprechendes Isolierelement eingebaut werden muss.

Es ist auch möglich, auf die anhand der Figuren erläuterte Weise Einleiterstromwandler für einphasige Schaltanlagen zu bilden. Bei einer solchen Ausführungsform würde dann Halteplatte 32 nur ein einziges Tragrohr 16 aufnehmen.

**Patentansprüche**

I. Stromwandleranordnung für eine einen oder mehrere Stromleiter (8, 9, 10) aufweisende gekapselte Schaltanlage, mit wenigstens einem einen Stromleiter (8, 9, 10) zu umgeben bestimmten, elektrisch leitenden Tragrohr (16), das mindestens einen Stromwandlerkern (17, 18, 19) mit aufgebrachtem Sekundärwicklungsteil (23, 24, 25) trägt und das mit zwei mit einem Abstand voneinander angeordneten, plattenartigen Halteelementen (32 bzw. 35, 36, 37) verbunden ist, von denen das eine Halteelement (32) lösbar an der Innenseite der Kapselung (2) befestigbar ist, und mit einer Spanneinrichtung (38, 40) zum Andrücken des mindestens einen Stromwandlerkernes gegen das eine Halteelement (32), dadurch gekennzeichnet, dass zwischen den beiden Halteelementen (32 bzw. 35, 36, 37) ein plattenartiges, das Tragrohr (16) umgebendes Festhalteorgan (39) angeordnet ist, zwischen dem und dem einen, ersten Halteelement (32) der mindestens eine Stromwandlerkern (17, 18, 19) festgehalten ist und dass sowohl das Festhalteorgan (39) wie auch das andere, zweite, vom Tragrohr (16) wegnehmbare Halteelement (35, 36, 37) mittels der einen Spanneinrichtung (38, 40) mit dem ersten Halteelement (32) verspannt sind.

2. Anordnung nach Anspruch I, dadurch gekennzeichnet, dass sich wenigstens das zweite Halteelement (35, 36, 37) auf dem einen Ende des Tragrohres (16) abstützt.

3. Anordnung nach Anspruch I oder 2, dadurch gekennzeichnet, dass zwischen einem der elektrisch leitenden Halteelemente (32 bzw. 35, 36, 37), vorzugsweise dem ersten Halteelement (32), und dem Tragrohr (16) ein Ring (33) aus elektrisch isolierendem Material angeordnet ist.

4. Anordnung nach einem der Ansprüche I - 3, dadurch gekennzeichnet, dass die Halteelemente (32 bzw. 35, 36, 37) als Abschirmelektroden ausgebildet sind.

5. Anordnung nach einem der Ansprüche I - 4, dadurch gekennzeichnet, dass die Spanneinrichtung die beiden Halteelemente (32 bzw. 35, 36, 37) miteinander verbindende Zuganker (38), vorzugsweise Gewindestäbe, aufweist, an denen das Festhalteorgan (39) in seiner jeweiligen Lage fixierbar ist.

6. Anordnung nach Anspruch 5, dadurch gekennzeichnet, dass die Zuganker (38) elektrisch leitend sind.

7. Anordnung nach einem der Ansprüche I - 6, gekennzeichnet durch einen vorzugsweise aus einem elektrisch isolierenden Material bestehenden, ein Stromleiterkupplungsstück (44) haltenden Halteteil (42), der am einen Halteelement (32 bzw. 35, 36, 37), vorzugsweise am ersten Halteelement (32), angebracht ist.

8. Anordnung nach einem der Ansprüche I - 7, dadurch gekennzeichnet, dass auf dem Tragrohr (16) zwei oder mehrere Stromwandlerkerne (17, 18, 19) mit aufgebrachtem Sekundärwicklungsteil (23, 24, 25) angeordnet sind.

9. Anordnung nach einem der Ansprüche I - 8 für eine mehrere Stromleiter aufweisende Schaltanlage, mit einer der Anzahl der Stromleiter entsprechenden Anzahl von Tragrohren (16), dadurch gekennzeichnet, dass das erste Halteelement (32) allen Tragrohren (16) gemeinsam ist, während jedem Tragrohr (16) ein eigenes zweites Halteelement (35, 36, 37) und ein eigenes Festhalteorgan (39) zugeordnet ist.

I0. Anordnung nach einem der Ansprüche I - 9, dadurch gekennzeichnet, dass die zweiten Halteelemente (35, 36, 37) und vorzugsweise auch die Festhalteorgane (39) dreieckförmig ausgebildet sind und vorzugsweise etwa die Form eines gleichseitigen Dreiecks haben.

II. Anordnung nach den Ansprüchen 9 und I0, dadurch gekennzeichnet, dass bei drei im Dreieck angeordneten Tragrohren (16) die zweiten Halteelemente (35, 36) von zwei Tragrohren (16) axialsymmetrisch und das zweite Halteelement (37) des dritten Tragrohres (16) in den Zwischenraum (B) zwischen die beiden andern Halteelemente (35, 36) eingreifend angeordnet sind.

I2. Anordnung nach einem der Ansprüche I - II, dadurch gekennzeichnet, dass die Sekundärwicklungsteile (23, 24, 25) mit Anschlusselementen (27) verbunden sind, die in einem Durchführungselement (28) gehalten sind, das dichtend in eine Oeffnung (29) in der Kapselung (2) einsetzbar ist.

**Claims**

1. A current transformer arrangement for an encased switch installation with one or more conductors (8, 9, 10), with at least one electrically conductive support tube (16) which is intended to surround a conductor (8, 9, 10), and which carries at least one current transformer core (17, 18, 19) with associated secondary winding part (23, 24, 25) and which is attached to two plate-like holding elements (32 and 35, 36, 37) arranged at a distance from each other, of which the one holding element (32) can be detachably fixed on the inside of the casing (2), and with a tensioning device (38, 40) for pressing the current transformer core, of which there is at least one, against the one holding element (32) characterized in that a plate-like locking part (39) surrounding the support tube (16) is arranged between the two holding elements (32 and 35, 36, 37) between which locking part and the one first holding element (32) the current transformer core (17, 18, 19), of which there is at least one, is held and that both the locking part (39) and the other second holding element (35, 36, 37) which can be removed from the support tube (16) are braced by means of the one tensioning device (38, 40) with the first holding element (32).

2. An arrangement according to claim 1, characterized in that at least the second holding element (35, 36, 37) is supported on the end of the support tube (16).

3. An arrangement according to claim 1 or 2, characterized in that between one of the electrically conductive holding elements (32 and 35, 36, 37) preferably the first holding element (32), and the support tube (16) a ring (33) of electrically insulating material is arranged.

4. An arrangement according to any one of claims 1 to 3, characterized in that the holding elements (32 and 35, 36, 37) take the form of shielded electrodes.

5. An arrangement according to any one of claims 1 to 4, characterized in that the tensioning device has tie rods (38) connecting the two holding elements (32 and 35, 36, 37), preferably threaded rods, on which the locking part (39) can be fixed in its appropriate position.

6. An arrangement according to claim 5, characterized in that the tie rods (38) are electrically conductive.

7. An arrangement according to any one of claims 1 to 6, characterized by a holding part (42) preferably consisting of an electrically insulating material, holding a conductor coupling piece (44), which [part] is attached to one holding element (32 and 35, 36, 37), preferably to the first holding element (32).

8. An arrangement according to any one of claims 1 to 7, characterized in that two or more current transformer cores (17, 18, 19) with an associated secondary winding part (23, 24, 25) are arranged on the support tube (16).

9. An arrangement according to any one of claims 1 to 8 for a switch installation with several conductors, with a number of support tubes (16) corresponding to the number of current conductors, characterized in that the first holding element (32) is common to all support tubes (16) while each support tube (16) is assigned its own second holding element (35, 36, 37) and its own locking part (39).

10. An arrangement according to any one of claims 1 to 9, characterized in that the second holding elements (35, 36, 37) and preferably also the locking parts (39) are triangular and preferably have approximately the form of an equilateral triangle.

11. An arrangement according to claims 9 and 10, characterized in that with three support tubes (16) arranged in a triangle the second holding elements (35, 36) of two support tubes (16) are axially symmetrical and the second holding element (37) of the third support tube (16) is arranged reaching into the intermediate space (B) between the two other holding elements (35, 36).

12. An arrangement according to any one of claims 1 to 11, characterized in that the secondary winding parts (23, 24, 25) are attached with connecting elements (27) which are held in a lead-through element (28) which can be inserted tightly in an opening (29) in the casing (2).

**Revendications**

1. Dispositif formant transformateur d'intensité pour une installation de distribuation blindée, contenant un ou plusieurs conducteurs de courant (8, 9, 10), et comportant au moins un tube de support électriquement conducteur (16), destiné à entourer un conducteur de courant (8, 9, 10) et portant au moins un noyau (17, 18, 19) du transformateur d'intensité, sur lequel est disposé une partie (23, 24, 25) d'un enroulement secondaire, et relié à deux éléments de referme en forme de plaques (32 ou 35, 36, 37), distants l'un de l'autre, l'un (32) des éléments de retenue étant fixé de façon amovible sur la face intérieure du blindage (2), et comportant un dispositif de serrage (28, 40) servant à serrer au moins un noyau du transformateur d'intensité contre l'élément de retenue (32), caractérisé en ce qu'entre les deux éléments de retenue (32 ou 35, 36, 37) se trouve disposé un organe de fixation (39) en forme de plaque, entourant le tube de support (16), qu'au moins un noyau (17, 18, 19) du transformateur d'intensité est fixé entre cet organe de fixation et un premier élément de retenue (32) et qu'aussi bien l'organe de fixation (39) que l'autre, à savoir le second élément de retenue (35, 36, 37), qui peut être retiré du tube de support (16), sont serrés vers le premier élément de retenue (32), au moyen d'un dispositif de serrage (38, 40).

2. Dispositif selon la revendication 1, caractérisé en ce qu'au moins le second élément de retenue (35, 36, 37) prend appui sur une extrémité du tube de support (16).

3. Dispositif selon la revendication 1 ou 2, caractérisé en ce qu'un anneau (33) réalisé en un matériau électriquement isolant est disposé entre l'un des éléments de retenue électriquement conducteurs (32 ou 35, 36, 37), de préférence le premier élément de retenue (32), et le tube de support (16).

4. Dispositif selon l'une des revendications 1–3, caractérisé en ce que les éléments de retenue, (32 ou 35, 36, 37) sont réalisés sous la forme d'électrodes d'écran.

5. Dispositif selon l'une des revendications 1–4, caractérisé en ce que le dispositif de serrage comporte des tirants (38), de préférence des tiges filetées, qui relient entre eux les éléments de retenue (32 ou 35, 36, 37) et sur lesquels l'organe de fixation (39) peut être fixé dans sa position respective.

6. Dispositif selon la revendication 5, caractérisé en ce que les tirants (38) sont électriquement conducteurs.

7. Dispositif selon l'une des revendications 1–6, caractérisé par une partie de retenue (42), qui est constituée de préférence en un matériau électriquement isolant, retient une pièce (44) d'accouplement d'un conducteur de courant et est installée sur un élément de retenue (32 ou 35, 36, 37), de préférence sur le premier élément de retenue (32).

8. Dispositif selon l'une des revendications 1–7, caractérisé en ce que deux ou plusieurs noyaux (17, 18, 19) du transformateur d'intensité, sur lesquels sont installés des parties (23, 24, 25) de l'enroulement secondaire, sont disposés sur le tube de support (16).

9. Dispositif selon l'une des revendications 1–8, pour une installation de distribution contenant plusieurs conducteurs de courant et comportant un nombre de tubes de support (16), qui correspond au nombre des conducteurs de courant, caractérisé en ce que le premier élément de retenue (32) est commun à tous les tubes de support (16), tandis qu'à chaque tube de support (16) sont associés un second élément particulier de retenue (35, 36, 37) et un élément particulier de fixation (39).

10. Dispositif selon l'une des revendications 1–9, caractérisé en ce que les seconds éléments de retenue (35, 36, 37) et de préférence également les organes de fixation (39) sont réalisés avec une forme triangulaire et possèdent de préférence approximativement la forme d'un triangle équilatéral.

11. Dispositif selon les revendications 9 et 10, caractérisé en ce que, dans le cas de trois tubes de support (16) disposés en triangle, les seconds éléments de retenue (35, 36) de deux tubes de support (16) sont symétriques axialement et le second élément de retenue (37) du troisième tube de support (16) est disposé de manière à s'engager dans l'espace (B) présent entre les deux autres éléments de retenue (35, 36).

12. Dispositif selon l'une des revendications 1–11, caractérisé en ce que les parties (23, 24, 25) de l'enroulement secondaire sont reliées à des éléments de raccordement (27), qui sont maintenus dans un élément de traversée (28), qui peut être inséré de façon étanche dans une ouverture (29) ménagée dans le blindage (2).

Fig. 1

Fig. 2

Fig.3